# FASCICULE DE BREVET EUROPEEN

(11) **EP 0 517 604 B1**
(45) Date de publication et mention de la délivrance du brevet: **15.11.1995**
(21) Numéro de dépôt: 92401551.4
(22) Date de dépôt: 05.06.1992
(51) Int. Cl.: F16H 3/66, F16H 47/08

(54) **Dispositif de changement de vitesses automatique transversal en bout**
Quereingebauter Antrieb mit Automatik-Schaltvorrichtung an einem Ende
Transaxle with automatic gear change device at one end

(30) Priorité: 07.06.1991 FR 9106929
(43) Date de publication de la demande: 09.12.1992
(73) Titulaire: REGIE NATIONALE DES USINES RENAULT S.A., 92109 Boulogne Billancourt (FR)
(72) Inventeur: Mercier, Jacques, F-75015 Paris (FR); Buannec, Michel, F-92000 Nanterre (FR)

(56) Documents cités:
- EP-A- 0 041 730
- WO-A-86/07425
- WO-A-90/07072
- DE-A- 2 259 304
- DE-A- 3 906 255
- FR-A- 2 454 567
- FR-A- 2 659 715
- GB-A- 1 190 088
- US-A- 4 232 567
- US-A- 5 013 289

## Description

L'invention se rapporte au domaine technique des transmissions automatiques comportant un convertisseur de couple entraîné directement par le moteur du véhicule et associé à un train épicycloïdal commandé par des freins et des embrayages. Plus précisément elle concerne une transmission de boîte de vitesses automatique destinée à être intégrée dans un groupe motopropulseur (GMP) transversal.

On peut distinguer deux tendances lourdes dans l'évolution des transmissions sur les véhicules automobiles, à savoir la généralisation des groupes motopropulseurs transversaux sur les véhicules haut de gamme et les exigences croissantes en matière de consommation de carburant et de silence de fonctionnement.

Dans le domaine des transmissions automatiques cette double tendance se traduit par des difficultés constructives croissantes puisque simultanément :
- les couples à transmettre augmentent avec le niveau de gamme du véhicule ;
- l'exigence d'un cinquième rapport de marche avant se fait de plus en plus pressante pour assurer les prestations attendues en matière de consommation et de silence de fonctionnement ;
- la longueur de la transmission est sévèrement limitée par la disposition transversale du GMP.

Pour résoudre ces problèmes constructifs, diverses solutions ont été proposées, parmi lesquelles on pourra mentionner :
- La disposition classique d'une boîte de vitesses automatique selon laquelle le convertisseur de couple et le train épicycloïdal sont coaxiaux, illustrée notamment par la publication FR-A-2.454.567 de la demanderesse : le train épicycloïdal décrit dans cette publication permet d'obtenir quatre rapports de marche avant et un rapport de marche arrière grâce à la combinaison de trois embrayages et de deux moyens d'immobilisation.
- le concept mis en oeuvre par certains constructeurs américains pour l'accouplement de moteurs en V : convertisseur, pompe et distributeur hydraulique en bout de moteur, transmission de mouvement entre turbine et arbre secondaire par chaîne silencieuse, sortie du mouvement vers les roues concentriques à l'arbre secondaire et à l'ensemble du mécanisme par pont planétaire, l'ensemble du mécanisme étant disposé derrière le moteur et parallèlement à lui. Outre une complexité certaine, ce concept implique une transmission gauche très courte et des difficultés de solidarisation de la boîte de vitesses au moteur pouvant, le cas échéant, conduire à des problèmes vibratoires.
- le concept industrialisé par des constructeurs japonais, consistant à répartir les constituants mécaniques - trains planétaires et mécanisme de commutation - entre les arbres primaire et secondaire de boîte : cette disposition conduit effectivement à une longueur de boîte faible, mais au prix d'une redondance mécanique se traduisant par une grande complexité : une telle boîte à seulement quatre rapports comporte typiquement quatre freins, trois embrayages et trois roues libres, alors que le minimum technique exige seulement trois embrayages et deux freins (ou deux embrayages et trois freins). Par la publication US-A-5 013 289, on connaît cependant une autre architecture de transmission automatique illustrant ce concept, qui permet d'obtenir six rapports de marche avant et un rapport de marche arrière avec le concours de cinq organes de commutation. Cette transmission automatique à arbres parallèles dispose à cet effet de deux trains planétaires supportés par son arbre secondaire, dont les planétaires respectifs sont reliés mécaniquement, ainsi que le porte-satellites du premier et la couronne du second, tandis que le porte-satellites du second attaque un pignon de descente sur le différentiel de la transmission.

Les inconvénients relatifs aux solutions évoquées ci-dessus sont naturellement aggravés si l'on considère une transmission à cinq ou six rapports, telle que l'illustration par la publication US-A-5 013 289 au point de devenir rédhibitoires dans certaines architectures de véhicules plus contraignantes.

Pour supprimer les inconvénients liés à ces solutions connues, la présente invention vise à concilier la simplicité conceptuelle d'une boîte en bout et une très faible longueur hors tout, tout en permettant une grande souplesse d'étagement : ce dernier point est tout particulièrement intéressant, car c'est un des inconvénients bien connus des transmissions automatiques à train planétaire de n'offrir aucun choix d'étagement une fois défini le train planétaire de base.

Ce problème est résolu par un dispositif de changement de vitesses automatique du type transversal en bout conforme à la revendication 1.

D'autres caractéristiques et avantages de l'invention apparaîtront clairement à la lecture de la description suivante d'un mode de réalisation particulier, en liaison avec les dessins annexés sur lesquels :
- la figure 1 représente le dispositif de changement de vitesses automatique de l'invention,
- la figure 2 illustre une variante de ce dispositif,
- la figure 3 illustre une autre variante de ce dispositif
- la figure 4 explicite la table de commutation du dispositif,
- la figure 5 restitue l'abaque de Ravigneaux de l'arrangement cinématique correspondant à l'invention.

Le mode de réalisation particulier faisant l'objet de cette description illustre une application de l'invention construite autour de l'adaptation d'un train planétaire de type Ravigneaux I . Bien entendu, cette application n'est pas limitative, et les principes constructifs qui sont à la base de l'invention s'appliqueraient, mutadis mutandis, à tous types de train planétaire réalisant des liaisons cinématiques analogues à celles d'un Ravigneaux I, c'est-à-dire à tout système à quatre arbres dont 3 sont reliés à l'entrée de boîte par des embrayages, le quatrième arbre étant relié à la sortie.

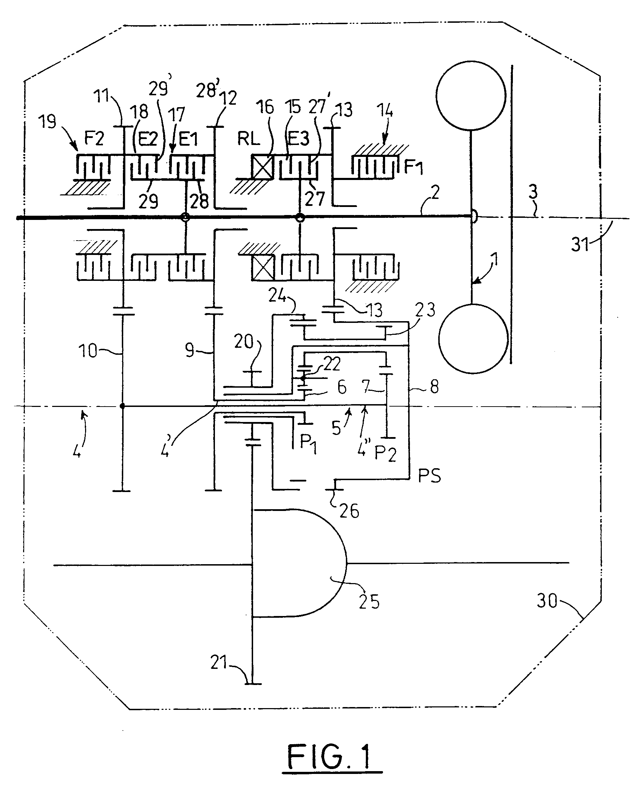

En référence à la figure 1, on voit que sur l'axe primaire (3), qui se confond avec l'axe du vilebrequin du moteur (3′) sont rassemblés le convertisseur (1), éventuellement la pompe de servitude non représentée, et l'ensemble des organes de commutation (14, 15, 16, 17, 18, 19). Sur l'axe secondaire 4, on trouve le train Ravigneaux I (5) qui comporte, comme il est bien connu, un premier planétaire P₁ (6) engrènant avec un satellite court (22), engrènant lui-même avec un satellite long (23). Ce dernier engrène, d'une part avec le planétaire P₂ (7), d'autre part avec la couronne (24) de sortie du train planétaire. La couronne (24) est liée au pignon d'attaque (20) de la réduction finale qui comporte également une couronne (21) accouplée au différentiel (25).

Les planétaires P₁ (6) et P₂ (7) sont respectivement reliés, par des axes coaxiaux à deux pignons (9) et (10) tandis que le porte-satellite (8), sur les axes duquel tourillonnent les satellites (6) et (23), présente à sa périphérie une denture cylindrique hélicoïdale (26). Les pignons (9), (10) et (26) assurent la liaison des divers organes du train planétaire (5) avec les éléments de commutation appropriés regroupés sur l'axe primaire (3), comme il a été décrit.

Le mouvement sort du convertisseur pontable (1) par l'arbre de turbine (2), qui porte les moyeux (28) (29) et (27) de trois embrayages E₁, E₂ et E₃ (17, 18, 15). L'embrayage E₃ (15) solidarise ainsi, par l'intermédiaire du pignon (13) engrenant avec le pignon (26), l'arbre turbine (2) avec le porte-satellite (8). L'embrayage E₁ (17), quant à lui, solidarise, par l'intermédiaire du pignon (12) engrènant avec le pignon (9), l'arbre turbine (2) avec le planétaire P₁ (6). Le moyeu (28) de l'embrayage E₁ (17) est solidaire du moyeu (29) de l'embrayage E₂ (18), qui, de ce fait, relie, lorsqu'il est serré, l'arbre de turbine (2) au planétaire P₁ (6) par l'intermédiaire de l'engrenage (11), fixé à la cloche (29′) de l'embrayage E₂ (18) et engrenant avec le pignon (10). Par ailleurs, la cloche (29′) de l'embrayage E₂ (18), et donc l'engrenage (11) peuvent être maintenus à vitesse nulle au moyen du frein F₂ (19) qui, lorsqu'il est serré,les solidarise au carter (30) de la transmission.

Similairement, la cloche de l'embrayage E₃ (15) et le pignon (13) peuvent être maintenus à vitesse nulle au moyen de la roue libre (16), facultative, et du frein F₁ (14), qui, lorsqu'ils sont activés, solidarisent (13) et (15) au carter (30) de la transmission. On voit donc, au travers de la description qui précède, que les connexions cinématiques propres à un train Ravigneaux I sont parfaitement établies par l'intermédiaire des couples de pignons (10) et (11), (9) et (12) ainsi que (13) et (26).

Les raisons de ces couples de pignons - ou pignons de descente - sont ajustables en tant que de besoin dans les limites constructives ; ainsi, alors que dans une transmission automatique conventionnelle, l'étagement est strictement défini - et pas toujours de la manière la plus heureuse du point de vue de l'agrément de conduite et de l'adaptation aux caractéristiques du moteur - par les raisons des deux trains élémentaires composant le train Ravigneaux I, l'arrangement cinématique objet de l'invention permet, grâce à l'ajustement des raisons des différents trains de pignons de liaison, de corriger et d'optimiser l'étagement de base procuré par le train Ravigneaux I. Cette possibilité apporte une solution au reproche très généralement fait aux transmissions automatiques conventionnelles de ne pouvoir offrir que des étagements figés et le plus souvent pas très bien adaptés.

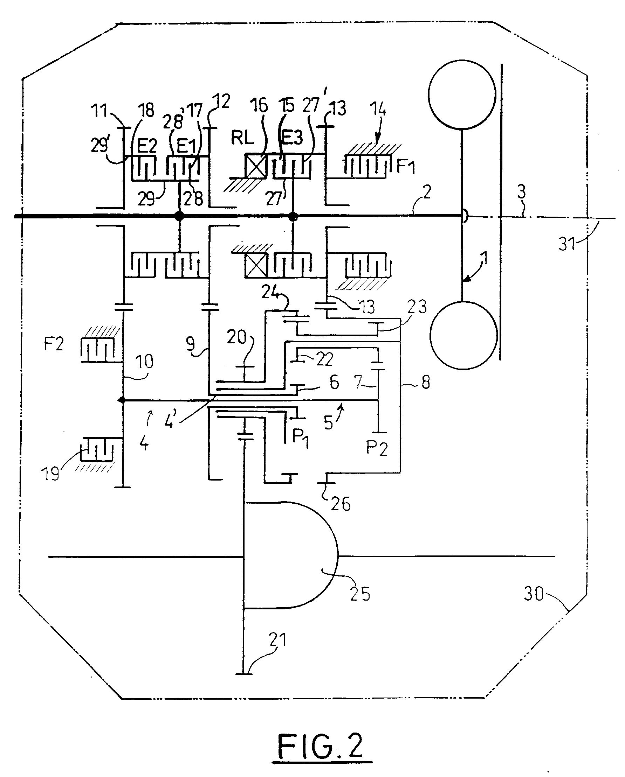

Dans la variante de l'invention faisant l'objet de la figure 2, le second moyen d'immobilisation F₂ (19) est transféré au secondaire de la boîte de vitesses, ce qui évite de faire supporter à la denture l'effort statique de réaction lorsque ce second moyen F₂ (19) est serré.

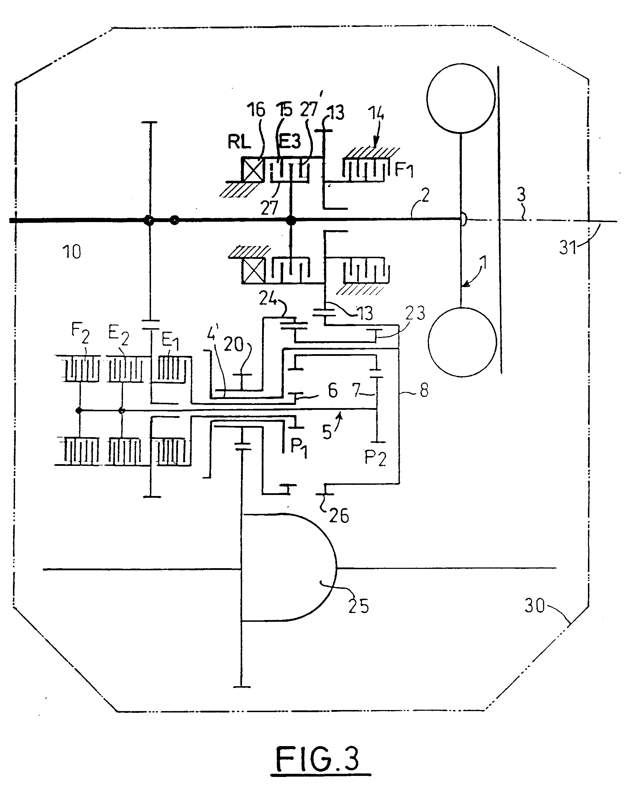

Dans la variante de l'invention faisant l'objet de la figure 3, une partie du mécanisme de commutation est transférée au secondaire (4) a boîte de vitesses. Cette variante présente la particularité de ne nécessiter que deux trains de descente (10), (13) au lieu de trois, et de conduire à un primaire (3) plus court et un secondaire (4) plus long que ceux de la variante de la figure 1, ce qui peut être, le cas échéant, mieux approprié à certaines architectures de véhicule. Sur l'abaque de Ravigneaux, les points E₁ et E₂ sont alors nécessairement à la même ordonnée.

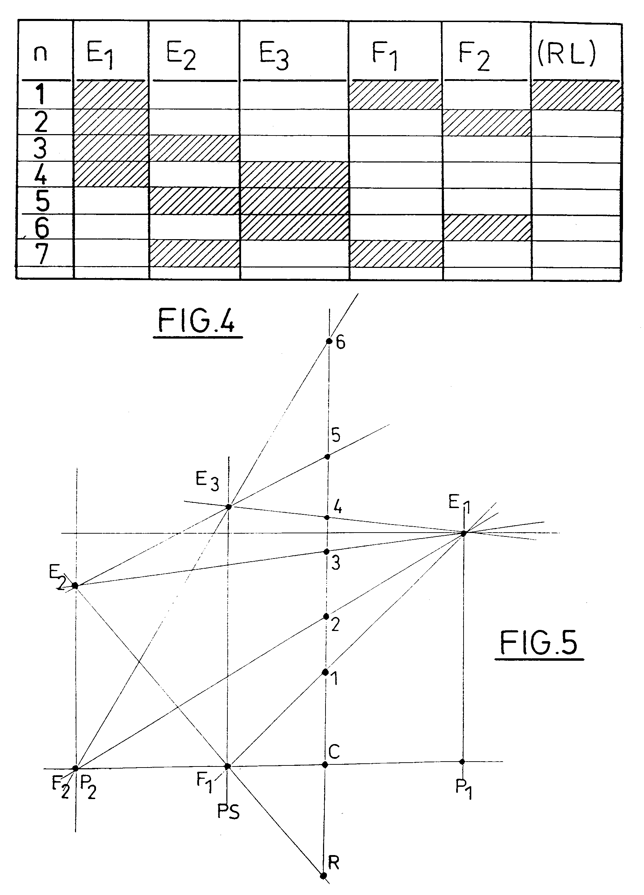

La figure 4 met en évidence que le dispositif de changement de vitesses de l'invention permet d'obtenir six rapports de marche avant et un rapport de marche arrière. Le premier rapport de marche avant est obtenu en serrant le premier embrayage E₁, et en actionnant le premier moyen d'immobilisation F₁, tandis que l'intervention de la roue libre RL n'est pas obligatoire. Le second rapport de marche avant correspond au serrage simultané du second et du troisième embrayages E₂, E₃. On obtient le troisième rapport en serrant simultanément le premier et le second embrayage E₁, E₂, le quatrième rapport en serrant simultanément le premier et le troisième embrayages E₁, E₃, et le cinquième rapport en serrant simultanément le second et le troisième embrayage E₂, E₃. Enfin le serrage du troisième embrayage E₃ et l'actionnement du second moyen d'immobilisation F₂ assurent l'engagement du sixième rapport, tandis que le serrage du second embrayage E₂ et l'actionnement du premier moyen d'immobilisation F₁ correspondent à la marche arrière.

En se reportant à la figure 5, qui représente, de manière très classique, l'abaque de Ravigneaux de l'arrangement cinématique correspondant à l'invention, on constate que le dispositif objet de l'invention :
- permet d'offrir théoriquement six rapports de marche avant et un rapport de marche arrière conformément au tableau de commutation explicité par la figure 4 ;
- est équivalent à une boîte en bout à quatre rapports de marche avant si les raisons des trains de descente sont toutes identiques (les rapports 3, 4 et 5 sont confondus à la valeur 1, les points E₁, E₂ et E₃ ayant même ordonnée sur l'abaque) ;
- permet d'offrir cinq rapports de marche avant avec l'étagement souhaité, en ajustant les raisons des trains de descente de façon appropriée et en supprimant, c'est-à-dire en n'utilisant pas, l'un ou l'autre des rapports indiqués 4, 5 ou 6, du tableau de commutation, selon l'étagement et les commutations souhaitées.

On voit par ailleurs que si le choix de la raison du train (11), (10) correspond à une surmultiplication, le couple d'entrée du train planétaire (5) sur le premier rapport est diminué dans le rapport de surmultiplication, ce qui permet d'augmenter la capacité de la boîte - par rapport au train planétaire - par simple choix des rapports des trains de descente.

## Revendications

1. Dispositif de changement de vitesses automatique de type transversal en bout présentant à l'intérieur d'un carter (30) un axe primaire (3) aligné sur l'axe de sortie du moteur et portant un convertisseur hydraulique (1), qui entraîne un axe secondaire (4) parallèle à l'axe primaire, portant lui-même un train épicycloïdal (5) associé à plusieurs organes de commutation, caractérisé en ce que le train épicycloïdal (5) comporte un porte-satellites (8) et un premier planétaire P₁ (6) engrenant avec un satellite court (22) lui-même en prise avec un satellite long (23) engrenant d'une part avec un second planétaire P₂ (7) et d'autre part avec la couronne de sortie (24) du train épicycloïdal (5).

2. Dispositif de changement de vitesses automatique selon la revendication 1, caractérisé en ce que la couronne de sortie (24) du train épicycloïdal (5) est liée au pignon d'attaque (20) d'une couronne de réduction finale (21) accouplée au différentiel (25).

3. Dispositif de changement de vitesses automatique selon la revendications 1, ou 2, caractérisé en ce que le premier et le second planétaire (6, 7) sont montés sur deux arbres coaxiaux (4', 4'') alignés sur l'axe secondaire (4).

4. Dispositif de changement de vitesses automatique selon la revendication 1, 2, ou 3, caractérisé en ce que le premier et le second planétaire P₁ et P₂ (6, 7) et le porte-satellites (8) sont liés par des pignons de liaison (9, 10, 26) aux organes de commutation appropriés, regroupés sur l'arbre de sortie du convertisseur de couple (2), ou arbre de turbine, aligné sur l'axe primaire (3).

5. Dispositif de changement de vitesse selon l'une quelconque des revendications précédentes caractérisé en ce que les organes de commutation sont constitués par un premier embrayage E₁ (17), un second embrayage E₂ (18), un troisième embrayage E₃ (15) présentant respectivement un moyeu (28, 29, 27) et une cloche d'embrayage (28', 29', 27') ainsi que par un premier frein F₁ (14), un second frein F₂ (19) et une roue libre RL.

6. Dispositif de changement de vitesses automatique selon la revendication 5, caractérisé en ce que l'ensemble des organes de commutation 14, 15, 16, 17,18, 19) est porté par l'axe primaire (3).

7. Dispositif de changement de vitesses automatique selon la revendication 5, caractérisé en ce que l'ensemble des organes de commutation (14, 15, 16, 17, 18) et porté par l'axe primaire (3) à l'exception du second moyen d'immobilisation F₂ (19) situé sur l'axe secondaire (4).

8. Dispositif de changement de vitesses selon la revendication 5, caractérisé en ce que le premier moyen d'immobilisation F₁ (14), la roue libre RL (16) et le troisième embrayage E₃ (15) sont disposés sur l'axe primaire, tandis que le premier et le second embrayage E₁ (17), E₂ (18), ainsi que le second moyen d'immobilisation F₂ (16) sont portés par l'axe secondaire (4).

9. Dispositif de changement de vitesses selon l'une des revendications 5 à 8, caractérisé en ce que l'arbre de turbine (2) porte le moyeu (17') du premier embrayage E₁ (17), destiné à rendre solidaire l'arbre de turbine (2), du premier planétaire P₁ (6).

10. Dispositif de changement de vitesses selon l'une des revendications 5 à 9, caractérisé en ce que l'arbre de turbine (2) porte le moyeu (27) du troisième embrayage E₃ (15) destiné à rendre solidaire l'arbre de turbine (2) du porte-satellites (8).

11. Dispositif de changement de vitesses selon la revendication 9 ou 10, caractérisé en ce que le moyeu (28) du premier embrayage E₁ (17) est solidaire du moyeu (29) du second embrayage E₂ (18) qui relie en position de serrage l'arbre de turbine (2) au second planétaire P₂ (7).

12. Dispositif de changement de vitesses automatique selon la revendication 9, 10 ou 11, caractérisé en ce que la cloche (29') du second embrayage E₂ (18) peut être immobilisée par le second frein F₂ (19) de façon à être solidarisée au carter (30).

13. Dispositif de changement de vitesses automatique selon l'une quelconque des revendications 9 à 12, caractérisé en ce que la cloche (27) du troisième embrayage E₃ (15) peut être immobilisée vis-à-vis du carter (30) par le premier frein F₁ (14) et/ou la roue libre RL (16).

14. Dispositif de changement de vitesses automatique selon l'une quelconque des revendications 9 à 13, caractérisé en ce que le premier rapport de marche avant obtenu par serrage du premier embrayage E₁ (17) et éventuellement par immobilisation du porte-satellites vis-à-vis du carter par la roue libre RL (16).

15. Dispositif de changement de vitesses automatique selon l'une quelconque des revendications 9 à 14, caractérisé en ce qu'il présente un second rapport de marche avant, obtenu par serrage du premier embrayage E₁ (17) et immobilisation du second frein F₂ (19).

16. Dispositif de changement de vitesses automatique selon l'une quelconque des revendications 9 à 15, caractérisé en ce qu'il présente un troisième rapport de marche avant, obtenu par serrage du premier et du second embrayage E₁, E₂ (17, 18).

17. Dispositif de changement de vitesses automatique selon l'une quelconque des revendications 9 à 16, caractérisé en ce qu'il présente un quatrième rapport de marche avant, obtenu en serrant le premier et le troisième embrayage E₁, E₃, (17, 15).

## Claims

1. An automatic gear change arrangement of the transverse end-mounted type having in the interior of a casing (30) a primary shaft (3) aligned with the output shaft of the engine and hearing a hydraulic converter (1) which drives a secondary shaft (4) parallel to the primary shaft, itself bearing an epicyclic train (5) associated with a plurality of shift members, characterised in that the epicyclic train (5) comprises a planet gear carrier (8) and a first planet assembly P₁ (6) meshing with a short planet gear (22) itself engaged with a long planet gear (23) meshing on the one hand with a second planet assembly P₂ (7) and on the other hand with the output annulus (24) of the epicyclic train (5).

2. An automatic gear change arrangement according to claim 1 characterised in that the output annulus (24) of the epicyclic train (5) is connected to the input pinion (20) of a final reduction crown wheel (21) coupled to the differential (25).

3. An automatic gear change arrangement according to claim 1 or claim 2 characterised in that the first and second planet assemblies (6, 7) are mounted on two coaxial shafts (4', 4'') which are aligned on the secondary axis (4).

4. An automatic gear change arrangement according to claim 1, claim 2 or claim 3 characterised in that the first and second planet assemblies P₁ and P₂ (6, 7) and the planet gear carrier (8) are connected by connecting pinions (9, 10, 26) to the appropriate shift members which are disposed on the output shaft of the torque converter (2) or turbine shaft which is aligned on the primary axis (3).

5. A gear change arrangement according to any one of the preceding claims characterised in that the shift members are formed by a first clutch E₁ (17), a second clutch E₂ (18), a third clutch E₃ (15) respectively having a hub (28, 29, 27) and a clutch housing (28', 29', 27') and a first brake F₁ (14), a second brake F₂ (19) and a free wheel RL.

6. An automatic gear change arrangement according to claim 5 characterised in that the assembly of the shift members (14, 15, 16, 17, 18, 19) is carried by the primary shaft (3).

7. An automatic gear change arrangement according to claim 5 characterised in that the assembly of the shift members (14, 15, 16, 17, 18) is carried by the primary shaft (3) except for the second immobilisation means F₂ (19) which is disposed on the secondary shaft (4).

8. A gear change arrangement according to claim 5 characterised in that the first immobilisation means F₁ (14), the free wheel RL (16) and the third clutch E₃ (15) are disposed on the primary shaft while the first and second clutches E₁ (17) and E₂ (18) and the second immobilisation means F₂ (16) are carried by the secondary shaft (4).

9. A gear change arrangement according to one of claims 5 to 8 characterised in that the turbine shaft (2) carries the hub (17') of the first clutch E₁ (17) which is intended to fix the turbine shaft (2) with respect to the first planet assembly P₁ (6).

10. A gear change arrangement according to one of claims 5 to 9 characterised in that the turbine shaft (2) carries the hub (27) of the third clutch E₃ (15) intended to fix the turbine shaft (2) with respect to the planet gear carrier (8).

11. A gear change arrangement according to claim 9 or claim 10 characterised in that the hub (28) of the first clutch E₁ (17) is fixed with respect to the hub (29) of the second clutch E₂ (18) which in the clamping position connects the turbine shaft (2) to the second planet assembly P₂ (7).

12. An automatic gear change arrangement according to claim 9, claim 10 or claim 11 characterised in that the housing (29') of the second clutch E₂ (18) can be immobilised by the second brake F₂ (19) so as to he fixed with respect to the casing (30).

13. An automatic gear change arrangement according to any one of claims 9 to 12 characterised in that the housing (27) of the third clutch E₃ (15) can he immobilised with respect to the casing (30) by the first brake F₁ (14) and/or the free wheel RL (16).

14. An automatic gear change arrangement according to any one of claims 9 to 13 characterised in that the first forward ratio is obtained by engagement of the first clutch E₁ (17) and possibly by immobilisation of the planet gear carrier with respect to the casing by the free wheel RL (16).

15. An automatic gear change arrangement according to any one of claims 9 to 14 characterised in that it has a second forward ratio obtained by engagement of the first clutch E₁ (17) and immobilisation of the second brake F₂ (19).

16. An automatic gear change arrangement according to any one of claims 9 to 15 characterised in that it has a third forward ratio obtained by engagement of the first and second clutches E₁, E₂ (17, 18).

17. An automatic gear change arrangement according to any one of claims 9 to 16 characterised in that it has a fourth forward ratio obtained by engagement of the first and third clutches E₁, E₃ (17, 15).

## Patentansprüche

1. Vorrichtung zur automatischen Gangschaltung, mit querliegender Bauart in Endstellung, die im Innern eines Gehäuses (30) eine mit der Ausgangsachse des Motors ausgerichtete Primärachse (3) aufweist und einen hydraulischen Wandler (1) trägt, der eine parallel zur Primärachse verlaufende Sekundärachse (4) antreibt, die ihrerseits ein Umlaufgetriebe (5) trägt, das mehreren Umschaltelementen zugeordnet ist, dadurch gekennzeichnet, daß das Umlaufgetriebe (5) einen Satellitenträger (8) und ein erstes Zentralrad P₁ (6) aufweist, das mit einem kurzen Satelliten (22) verzahnt ist, der seinerseits mit einem langen Satelliten (23) in Eingriff ist, der einerseits mit einem zweiten Zentralrad P₂ (7) und andererseits mit dem Ausgangskranz (24) des Umlaufgetriebes (5) verzahnt ist.

2. Vorrichtung zur automatischen Gangschaltung nach Anspruch 1, dadurch gekennzeichnet, daß der Ausgangskranz (24) des Umlaufgetriebes (5) mit dem Antriebsritzel (20) eines mit dem Differential (25) gekoppelten Enduntersetzungskranzes (21) verbunden ist.

3. Vorrichtung zur automatischen Gangschaltung nach Anspruch 1 oder 2, dadurch gekennzeichnet, daß das erste und das zweite Zentralrad (6, 7) auf zwei koaxialen Wellen (4', 4'') befestigt sind, die mit der Sekundärachse (4) ausgerichtet sind.

4. Vorrichtung zur automatischen Gangschaltung nach Anspruch 1, 2 oder 3, dadurch gekennzeichnet, daß das erste und das zweite Zentralrad P₁ und P₂ (6, 7) und der Satellitenträger (8) über Verbindungsritzel (9, 10, 26) mit den geeigneten Umschaltelementen verbunden sind, die auf der Ausgangswelle des Drehmomentwandlers (2) oder der Turbinenwelle angeordnet sind, die mit der Primärachse (3) ausgerichtet ist.

5. Vorrichtung zur automatischen Gangschaltung nach einem der vorhergehenden Ansprüche, dadurch gekennzeichnet, daß die Umschaltelemente aus einer ersten Kupplung E₁ (17), einer zweiten Kupplung E₂ (18), einer dritten Kupplung E₃ (15), die jeweils eine Nabe (28, 29, 27) und eine Kupplungsglocke (28', 29', 27') aufweisen, sowie aus einer ersten Bremse F₁ (14), einer zweiten Bremse F₂ (19) und einem freilaufenden Rad RL bestehen.

6. Vorrichtung zur automatischen Gangschaltung nach Anspruch 5, dadurch gekennzeichnet, daß die Einheit der Umschaltelemente (14, 15, 16, 17, 18, 19) von der Primärachse (3) getragen wird.

7. Vorrichtung zur automatischen Gangschaltung nach Anspruch 5, dadurch gekennzeichnet, daß die Einheit der Umschaltelemente (14, 15, 16, 17, 18) von der Primärachse (3) getragen wird, mit Ausnahme der zweiten Feststellungseinrichtung F₂ (19), die sich auf der Sekundärachse (4) befindet.

8. Vorrichtung zur automatischen Gangschaltung nach Anspruch 5, dadurch gekennzeichnet, daß die erste Feststellungseinrichtung F₁ (14), das freilaufende Rad RL (16) und die dritte Kupplung E₃ (15) auf der Primärachse angeordnet sind, während die erste und die zweite Kupplung E₁ (17), E₂ (18) sowie die zweite Feststellungseinrichtung F₂ (16) von der Sekundärachse (4) getragen werden.

9. Vorrichtung zur automatischen Gangschaltung nach einem der Ansprüche 5 bis 8, dadurch gekennzeichnet, daß die Turbinenwelle (2) die Nabe (17') der ersten Kupplung E₁(17) trägt, um die Turbinenwelle (2) mit dem ersten Zentralrad P₁ (6) zu verbinden.

10. Vorrichtung zur automatischen Gangschaltung nach einem der Ansprüche 5 bis 9, dadurch gekennzeichnet, daß die Turbinenwelle (2) die Nabe (27) der dritten Kupplung E₃ (15) trägt, um die Turbinenwelle (2) mit dem Satellitenträger (8) zu verbinden.

11. Vorrichtung zur automatischen Gangschaltung nach Anspruch 9 oder 10, dadurch gekennzeichnet, daß die Nabe (28) der ersten Kupplung E₁ (17) mit der Nabe (29) der zweiten Kupplung E₂ (18) verbunden ist, welche in der zusammengedrückten Stellung die Turbinenwelle (2) mit dem zweiten Zentralrad P₂ (7) verbindet.

12. Vorrichtung zur automatischen Gangschaltung nach Anspruch 9, 10 oder 11, dadurch gekennzeichnet, daß die Glocke (29') der zweiten Kupplung E₂ (18) mittels der zweiten Bremse F₂ (19) festgestellt werden kann, um sie mit dem Gehäuse (30) zu verbinden.

13. Vorrichtung zur automatischen Gangschaltung nach einem der Ansprüche 9 bis 12, dadurch gekennzeichnet, daß die Glocke (17) der dritten Kupplung E3 (15) gegenüber dem Gehäuse (30) mittels der ersten Bremse F1 (14) und/oder des freilaufenden Rads RL (16) festgestellt werden kann.

14. Vorrichtung zur automatischen Gangschaltung nach einem der Ansprüche 9 bis 13, dadurch gekennzeichent, daß das erste Vorwärtsgang-Übersetzungsverhältnis durch Zusammendrücken der ersten Kupplung E₁ (17) und gegebenenfalls durch Feststellung des Satellitenträgers gegenüber dem Gehäuse mittels des freilaufenden Rads RL (16) gewonnen wird.

15. Vorrichtung zur automatischen Gangschaltung nach einem der Ansprüche 9 bis 14, dadurch gekennzeichnet, daß sie ein zweites Vorwärtsgang-Übersetzungsverhältnis aufweist, das durch Zusammendrücken der ersten Kupplung E₁ (17) und Feststellung der zweiten Bremse F₂ (19) gewonnen wird.

16. Vorrichtung zur automatischen Gangschaltung nach einem der Ansprüche 9 bis 15, dadurch gekennzeichnet, daß sie ein drittes Vorwärtsgang-Übersetzungsverhältnis aufweist, das durch Zusammendrücken der ersten und der zweiten Kupplung E₁, E₂ (17, 18) gewonnen wird.

17. Vorrichtung zur automatischen Gangschaltung nach einem der Ansprüche 9 bis 16, dadurch gekennzeichnet, daß sie ein viertes Vorwärtsgang-Übersetzungsverhältnis aufweist, das durch Zusammendrücken der ersten und der dritten Kupplung E₁, E₃ (17, 15) gewonnen wird.
